# EUROPEAN PATENT SPECIFICATION

(11) **EP 3 587 066 B1**
(45) Date of publication and mention of the grant of the patent: **15.11.2023**
(21) Application number: 19160860.3
(22) Date of filing: 05.03.2019
(51) Int. Cl.: B29C 45/26, C21D 1/18, C22B 9/16, C22B 9/18, C22B 9/20, C22C 38/44, C22C 38/46, B29C 33/38

(54) **PLASTIC INJECTION MOLD TOOLING AND A METHOD OF MANUFACTURE THEREOF**
KUNSTSTOFFSPRITZGIESSWERKZEUG UND VERFAHREN ZUR HERSTELLUNG DAVON
OUTILLAGE DE MOULAGE PAR INJECTION DE MATIÈRE PLASTIQUE ET SON PROCÉDÉ DE FABRICATION

(30) Priority: 26.06.2018 US 201816018833
(43) Date of publication of application: 01.01.2020
(73) Proprietor: A. Finkl & Sons Co., Chicago, IL 60619-8004 (US)
(72) Inventor: LAPIERRE, Louis-Philippe, Chicago, IL 60605 (US); UNDERYS, Algirdas, Arlington Heights, IL 60004 (US)
(74) Representative: Plasseraud IP

(56) References cited:
- EP-A1- 1 251 187
- EP-A1- 3 385 049
- JP-A- 2003 138 342
- US-A1- 2013 255 844
- US-A1- 2015 144 233
- US-A1- 2017 217 065
- US-A1- 2017 226 605

## Description

### FIELD OF THE DISCLOSURE

This invention pertains to plastic injection mold tooling, and also large forgings, formed from a low carbon mold steel having markedly increased hardening and hardenability properties in large sections as contrasted to currently available commercial products. The above attributes are obtained together with equal or better machinability and improved mold parting line wear. When manufactured in conjunction with a double melt process, this invention can improve significantly polishing characteristics and other attributes of molded parts in tooling sets.

### BACKGROUND OF THE DISCLOSURE

The place of plastics in the automotive industry has grown tremendously as it is a key to future high performance, more fuel efficient vehicles. Plastics offer designers and engineers multiple advantages in many applications by providing lightweight and versatile designs as well as lower manufacturing costs. The versatility of plastics can be expressed by the wide range of shapes and surface finishes now possible. However, this versatility would not be possible without quality plastic injection mold steels. The increasing demand for fuel efficient cars is pushing designers to create more aerodynamic cars, which in turn require larger complex plastic parts such as bumpers, dashboards and door panels. Other industries have similar requirements for plastic parts such as exterior furniture. Plastic injection molding is used for a fast paced production and tool steels are used for this application. The properties of a quality plastic injection mold steel vary from the mold manufacturer to the end-user. Good machinability as well as the ability to provide a good surface finish are important aspects for the mold manufacturer. However, uniform hardness is the key for the end-user to produce parts without shape distortion. As parts increase in size, molds have to be larger and still display these properties across the entire section. An example of a plastic injection mold tooling and a method of manufacture thereof may be found in EP3385049A1 or US2017226605A1. JP2003138342A and US 2015/144233A1 disclose general remelting methods for similar steels.

### SUMMARY OF THE DISCLOSURE

In accordance with one aspect of the present disclosure, a method of manufacturing plastic injection molding tooling having excellent hardenability in sections of 508 mm (20 inches) and larger is disclosed in accordance with claim 1. The method comprises the steps of (1) forming a steel melt having less than all of the powder alloy ingredients in a heating unit; (2) transferring said melt to a receptacle to thereby form a heat; (3) heating, further alloying of the alloy composition into specification and refining said heat by stirring using argon purging, magnetic stirring or some other mixing method; (4) vacuum degassing, teeming and casting said heat to form ingots by bottom pouring; (5) remelting said ingots by vacuum arc remelting (VAR) or electroslag remelting (ESR); and (6) hot working said ingots to form mold and die blocks having uniform hardenability cross sections of 508 mm (20 inches) and larger (1 inch = 25,4 mm). The mold and die blocks may have the following composition by weight percent:

| | |
|---|---|
| C | 0.15-0.40, |
| Mn | 0.60-1.10, |
| Si | 0.60 max, |
| Cr | 1.00 - 2.00, |
| Ni | 0.15 - 1.00, |
| Mo | 0.20 - 0.55, |
| V | 0.05 - 0.20, |
| Al | 0.040 max, |
| P | 0.025 max, |
| S | 0.025 max, |

incidental impurities, and
a balance of Fe.

The method further comprises the steps of: (7) heat treating said mold and die blocks by quenching and tempering, and (8) forming plastic injection molding tooling from said quenched and tempered blocks.

In another refinement, said heating unit may be an electric arc furnace.

In another refinement, said heating unit may be a vacuum induction furnace.

In another refinement, the mold and die blocks may have the following composition by weight percent:

| | |
|---|---|
| C | 0.20 - 0.35, |
| Mn | 0.70 - 1.10, |
| Si | 0.15 - 0.50, |
| Cr | 1.10 - 2.00, |
| Ni | 0.20 - 0.90, |
| Mo | 0.30 - 0.55, |
| V | 0.07 - 0.20, |
| Al | 0.040 max, |
| P | 0.020 max, |
| S | 0.015 max, |

incidental impurities, and
a balance of Fe.

In another refinement, the mold and die blocks may have the following composition by weight percent:

| | |
|---|---|
| C | 0.25 - 0.33, |
| Mn | 0.80 - 1.10, |
| Si | 0.20 - 0.45, |
| Cr | 1.20 - 2.00, |
| Ni | 0.30 - 0.80, |
| Mo | 0.35 - 0.55, |
| V | 0.10 - 0.20, |
| Al | 0.020 max, |
| P | 0.015 max, |
| S | 0.005 max, |

incidental impurities, and
a balance of Fe.

In accordance with another aspect of the present disclosure, a plastic injection molding tooling having uniform hardenability in sections of 20 inches and larger is disclosed in accordance with claim 6. The plastic injection mold tooling is manufactured by a method comprising: (1) forming a steel melt having less than all of the powder alloy ingredients; (2) transferring said melt to a receptacle to thereby form a heat; (3) heating, further alloying of the alloy composition into specification and refining said heat by stirring using argon purging, magnetic stirring or some other mixing method; (4) vacuum degassing, teeming and casting said heat to form ingots by bottom pouring; (5) remelting said ingots by vacuum arc remelting (VAR) or electroslag remelting (ESR); and (6) hot working said ingots to form mold and die blocks having uniform hardenability cross sections of 20 inches and larger. The mold and die blocks may have the following composition by weight percent:

| | |
|---|---|
| C | 0.15 - 0.40, |
| Mn | 0.60 - 1.10, |
| Si | 0.60 max, |
| Cr | 1.00 - 2.00, |
| Ni | 0.15 - 1.00, |
| Mo | 0.20 - 0.55, |
| V | 0.05 - 0.20, |
| Al | 0.040 max, |
| P | 0.025 max, |
| S | 0.025 max, |

incidental impurities, and
a balance of Fe.

The method further comprises the steps of: (7) heat treating said mold and die blocks by quenching and tempering; and (8) forming plastic injection molding tooling from said quenched and tempered blocks.

In another refinement, forming said steel melt may comprise forming said steel melt by electric arc melting.

In another refinement, forming said steel melt may comprise forming said steel melt by vacuum induction melting.

In another refinement, said mold and die blocks may have the following composition by weight percent:

| | |
|---|---|
| C | 0.20 - 0.35, |
| Mn | 0.70 - 1.10, |
| Si | 0.15 - 0.50, |
| Cr | 1.10 - 2.00, |
| Ni | 0.20 - 0.90, |
| Mo | 0.30 - 0.55, |
| V | 0.07 - 0.20, |
| Al | 0.040 max, |
| P | 0.020 max, |
| S | 0.015 max, |

incidental impurities, and
a balance of Fe.

In another refinement, said mold and die blocks may have the following composition by weight percent:

| | |
|---|---|
| C | 0.25 - 0.33, |
| Mn | 0.80 - 1.10, |
| Si | 0.20 - 0.45, |
| Cr | 1.20 - 2.00, |
| Ni | 0.30 - 0.80, |
| Mo | 0.35 - 0.55, |
| V | 0.10 - 0.20, |
| Al | 0.020 max, |
| P | 0.015 max, |
| S | 0.005 max, |

incidental impurities, and
a balance of Fe.

Other objects and advantages will be apparent from the following description.

### BRIEF DESCRIPTION OF THE DRAWINGS

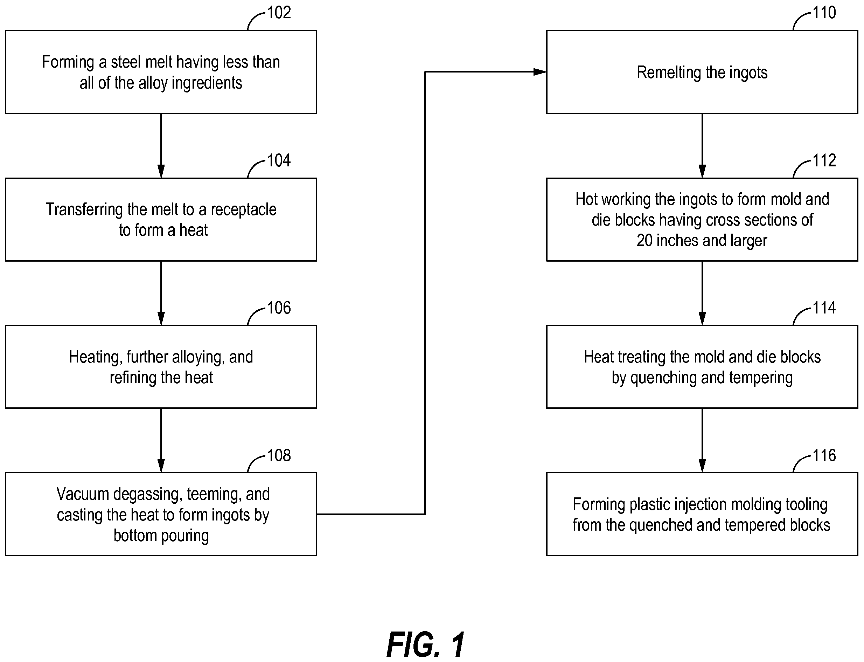

FIG. 1 is a flowchart of a series of steps that may be involved in manufacturing plastic injection mold tooling, in accordance with a method of the present disclosure.

### DETAILED DESCRIPTION OF THE DISCLOSURE

Carbon is necessary to provide the required hardness and wear resistance. If carbon is significantly higher than 0.40% the mold block will exhibit low machinability and polishing characteristics. Preferably a maximum of 0.35% carbon is used to ensure good machinability. If substantially less than 0.15% carbon is used, wear resistance and mechanical properties will not be suitable for service conditions to which the mold blocks are subjected. Preferably, a minimum of 0.20% carbon is used to ensure acceptable wear resistance, hardness and mechanical properties. Most preferably, carbon in the range of 0.25% and .035% with an aim of 0.30% is used.

Manganese is essential for hardenability and as a deoxidizer in the steelmaking process. It also acts to control sulphides in forging operations in combination with the other alloying elements. If significantly higher than 1.10% is present there is a risk that retained austenite will be present. If substantially less than 0.60% manganese is present the hardenability of the mold block will be lessened. In addition, to ensure sulphur control the manganese content should be present in an amount of at least 20 times the sulphur content. Manganese also contributes to wear resistance, although to a lesser extent than other carbide formers. Preferably, manganese is present in the range of 0.70% to 1.10% and most preferably from 0.80% to 1.10%.

Silicon is specified for its deoxidizing ability in the steelmaking process. If present in substantially greater quantities than 0.60% there is a predisposition toward embrittlement of the final product.

Chromium is necessary for carbide formation, for hardenability and for wear resistance. If substantially more than the maximum of 2.00% chromium is present the hardening temperature becomes too high for normal production heat treatment processes. Below the specified minimum of 1.00% the wear resistance will be negatively affected. Preferably, chromium is present in the amount of 1.10% to 2.00% and most preferably from 1.20% to 2.00%.

Nickel is required to strengthen the ferrite and provide toughness to the mold block. If present in a quantity substantially more than 1.00% there is a risk of retained austenite and decrease in machinability. Excess nickel may also promote high temperature hairline cracking which requires scarfing and/or conditioning during the forging process. If nickel is substantially less than the specified minimum of 0.30%, the mold block will have reduced hardenability and deficiency of toughness during service. Nickel should be present preferably in the range of 0.20% and 0.90% and most preferably in the range of 0.30% and 0.80%.

Molybdenum is a key element contributing to hardenability and wear resistance by the fact that it is a strong carbide former. Its beneficial effects are effective in the range of 0.20% to 0.55% molybdenum but preferably it is maintained in the upper band of the range from 0.30% to 0.55% molybdenum and most preferably in the range of 0.35% to 0.55% molybdenum.

Vanadium is a key element and is specified for its high effect on hardenability, wear resistance and grain refining properties. It has been discovered that the addition of vanadium in the specified range of 0.05% to 0.20% combined with proper heat treatment can significantly improve hardenability, particularly in large sections of at least 20 inches. Testing of steel samples with statistically constant alloy constituents except for vanadium as shown in Table 1 showed that the addition of vanadium significantly increased hardenability.

**TABLE 1**

| ID | C | Si | Mn | Cr | Ni | Mo | V |
|---|---|---|---|---|---|---|---|
| X0 | .035 | 0.40 | 0.85 | 1.82 | 0.48 | 0.53 | 0 |
| X10 | 0.35 | 0.43 | 0.97 | 1.87 | 0.47 | 0.54 | 0.10 |
| X15 | 0.36 | 0.43 | 1.01 | 1.85 | 0.50 | 0.53 | 0.13 |
| X20 | 0.35 | 0.41 | 1.00 | 1.85 | 0.49 | 0.51 | 0.19 |

For steel X0, one type of carbide was mostly present containing molybdenum and manganese. X20 showed the same carbides but with the addition of a second type of carbides containing vanadium. The vanadium carbide family is much more stable to aging when compared to chromium carbides. To have optimal effect on all characteristics, preferably vanadium is present in the range of 0.07% to 0.20%, and most preferably in the range of 0.10% to 0.20% with an aim of 0.15% as shown in the Figure. Vanadium also has a significant impact on wear resistance and machinability.

Aluminum is desirable for grain refinement but can have a detrimental effect on steel quality by causing the presence of aluminates, an undesirable impurity. It is therefore important to minimize the addition of aluminum to a maximum of 0.040% in the final melt composition. Most preferably, an aim of 0.020% aluminum will achieve grain refinement.

Phosphorus could increase machinability but the detrimental effects of this element in tool steels, such as an increase in the ductile-brittle transition temperature, outweigh any beneficial effects. Accordingly, the phosphorus content should not be more than the specified maximum of 0.025% and most preferably lower than 0.015%.

Sulfur is a key element for machinability and it is commonly believed that a content up to 0.045% in tool steel would render acceptable machinability. However, sulphur also has several detrimental effects in this type of steel including hot shortness during processing and reduced polishing and texturing characteristics. Since the effect of vanadium on carbide size has a significant impact on machinability, it is desirable to maintain sulphur to a value lower than 0.025%, preferably lower than 0.015% and most preferably lower than 0.005%.

A comparison of core vs. hardness tests in mold and die block sections of 20 inches and larger has disclosed that the hardenability of the pieces are substantially uniform across the entire cross section. This is a marked improvement over tooling sets made from currently available steels in which the hardenability of such large sections tends to fall off near the center.

A series of steps that may be involved in manufacturing plastic injection molding tooling having high hardenability in sections of 20 inches and larger is shown in FIG. 1. At a first block 102, a steel melt may be formed in a heating unit, such as an electric arc furnace. The melt may contain a majority but less than all of the requisite alloys, aluminum for example being deferred until near the end of the process. It will be understood that the heating unit used for forming the steel melt may be other types of heating units apparent to those skill in the art such as, but not limited to, a vacuum induction furnace or a laser melting device. Thus, the steel melt may be formed by various processes such as, but not limited to, electric arc melting, vacuum induction melting, laser melting, and other suitable heating methods apparent to those with ordinary skill in the art. The alloy elements are provided as a powder and melted with a laser to form the steel melt.

After the melt is formed, it is transferred to a receptacle, such as a bottom pour ladle, to thereby form a heat according to a block 104. Thereafter, the heat is heated, further alloyed and refined by mixing the heat until the alloys are uniformly dispersed and the alloy composition of the heat is brought into specification (block 106). Thereafter, the heat is subjected to vacuum degassing and then teemed into ingot molds by bottom pouring according to a block 108.

Additionally, according to a block 110, the ingots are subjected to remelting as a secondary melting process. Remelting may improve the quality of the ingots by increasing the chemical and/or mechanical homogeneity of the ingots, and by providing more control over the microstructure characteristics of the ingots. Remelting may be accomplished by vacuum arc remelting (VAR), electroslag remelting (ESR), or other suitable remelting methods apparent to those with ordinary skill in the art.

Following solidification, the ingots may be hot worked to form the resultant low alloy steel into mold and die blocks having cross sections of 20 inches and larger (block 112). Thereafter, the mold and die blocks may be heat treated by quenching, preferably in water, and tempered according to next block 114. At a next block 116, the plastic injection molding tooling may be formed from the quenched and tempered mold and die blocks.

## Claims

1. A method of manufacturing plastic injection molding tooling having excellent hardenability in sections of 508 mm (20 inches) and larger, said method comprising the steps of:
(1) forming a steel melt having less than all of the powder alloy ingredients in a heating unit;
(2) transferring said melt to a receptacle to thereby form a heat;
(3) heating, further alloying of the alloy composition into specification and refining said heat by stirring using argon purging, magnetic stirring or some other mixing method;
(4) vacuum degassing, teeming and casting said heat to form ingots by bottom pouring;
(5) remelting said ingots by vacuum arc remelting (VAR) or electroslag remelting (ESR);
(6) hot working said ingots to form mold and die blocks having uniform hardenability cross sections of 508 mm (20 inches) and larger, said mold and die blocks having the following composition by weight percent
| | |
|---|---|
| C | 0.15 - 0.40, |
| Mn | 0.60 - 1.10, |
| Si | 0.60 max, |
| Cr | 1.00 - 2.00, |
| Ni | 0.15 - 1.00, |
| Mo | 0.20 - 0.55, |
| V | 0.05 - 0.20, |
| Al | 0.040 max, |
| P | 0.025 max, |
| S | 0.025 max; |
incidental impurities, and
a balance of Fe;
(7) heat treating said mold and die blocks by quenching and tempering; and
(8) forming plastic injection molding tooling from said quenched and tempered blocks.

2. The method of manufacturing plastic injection molding tooling of claim 1, wherein said heating unit is an electric arc furnace.

3. The method of manufacturing plastic injection molding tooling of claim 1, wherein said heating unit is a vacuum induction furnace.

4. The method of manufacturing plastic injection molding tooling of claim 1, further **characterized in that** the mold and die blocks have the following composition by weight percent:
| | |
|---|---|
| C | 0.20 - 0.35, |
| Mn | 0.70 - 1.10, |
| Si | 0.15 - 0.50, |
| Cr | 1.10 - 2.00, |
| Ni | 0.20 - 0.90, |
| Mo | 0.30 - 0.55, |
| V | 0.07 - 0.20, |
| Al | 0.040 max, |
| P | 0.020 max, |
| S | 0.015 max, |
incidental impurities, and
a balance of Fe.

5. The method of manufacturing the plastic injection mold and die block tooling of claim 1, further **characterized in that** the molds and die blocks have the following composition by weight percent:
| | |
|---|---|
| C | 0.25 - 0.33, |
| Mn | 0.80 - 1.10, |
| Si | 0.20 - 0.45, |
| Cr | 1.20 - 2.00, |
| Ni | 0.30 - 0.80, |
| Mo | 0.35 - 0.55, |
| V | 0.10 - 0.20, |
| Al | 0.020 max, |
| P | 0.015 max, |
| S | 0.005 max, |
incidental impurities, and
a balance of Fe.

6. A plastic injection molding tooling having uniform high hardenability in sections of 508 mm (20 inches) and larger, the plastic injection mold tooling being manufactured by a method comprising:
(1) forming a steel melt having less than all of the powder alloy ingredients;
(2) transferring said melt to a receptacle to thereby form a heat;
(3) heating, further alloying of the alloy composition into specification and refining said heat by stirring using argon purging, magnetic stirring or some other mixing method;
(4) vacuum degassing, teeming and casting said heat to form ingots by bottom pouring;
(5) remelting said ingots by vacuum arc remelting (VAR) or electroslag remelting (ESR);
(6) hot working said ingots to form mold and die blocks having uniform hardenability cross sections of 508 mm (20 inches) and larger, said mold and die blocks having the following composition by weight percent
| | |
|---|---|
| C | 0.15 - 0.40, |
| Mn | 0.60 - 1.10, |
| Si | 0.60 max, |
| Cr | 1.00 - 2.00, |
| Ni | 0.15 - 1.00, |
| Mo | 0.20 - 0.55, |
| V | 0.05 - 0.20, |
| Al | 0.040 max, |
| P | 0.025 max, |
| S | 0.025 max, |
incidental impurities, and
a balance of Fe;
(7) heat treating said mold and die blocks by quenching and tempering; and
(8) forming said plastic injection molding tooling from said quenched and tempered blocks.

7. The plastic injection molding tooling of claim 6, wherein forming said steel melt comprises forming said steel melt by electric arc melting.

8. The plastic injection molding tooling of claim 6, wherein forming said steel melt comprises forming said steel melt by vacuum induction melting.

9. The plastic injection molding tooling of claim 6, wherein said mold and die blocks have the following composition by weight percent:
| | |
|---|---|
| C | 0.20 - 0.35, |
| Mn | 0.70 - 1.10, |
| Si | 0.15 - 0.50, |
| Cr | 1.10 - 2.00, |
| Ni | 0.20 - 0.90, |
| Mo | 0.30 - 0.55, |
| V | 0.07 - 0.20, |
| Al | 0.040 max, |
| P | 0.020 max, |
| S | 0.015 max, |
incidental impurities, and
a balance of Fe.

10. The plastic injection molding tooling of claim 6, wherein said mold and die blocks have the following composition by weight percent:
| | |
|---|---|
| C | 0.25 - 0.33, |
| Mn | 0.80 - 1.10, |
| Si | 0.20 - 0.45, |
| Cr | 1.20 - 2.00, |
| Ni | 0.30 - 0.80, |
| Mo | 0.35 - 0.55, |
| V | 0.10-0.20, |
| Al | 0.020 max, |
| P | 0.015 max, |
| S | 0.005 max, |
incidental impurities, and
a balance of Fe.

## Patentansprüche

1. Verfahren zur Herstellung von Kunststoffspritzgusswerkzeug mit ausgezeichneter Härtbarkeit in Querschnitten von 508 mm (20 Inch) und größer, wobei das Verfahren die Schritte aufweist:
(1) Bilden einer Stahlschmelze, die weniger als alle der Pulverlegierungsbestandteile hat, in einer Heizeinheit;
(2) Transferieren der Schmelze zu einem Behälter, um dadurch eine Charge zu bilden;
(3) Erhitzen, weiteres Legieren der Legierungszusammensetzung in eine Spezifikation und Feinen der Charge durch Rühren unter Verwendung von Spülen mit Argon, magnetischem Rühren oder eines anderen Mischverfahrens;
(4) Vakuumentgasen, Ausgießen und Gießen der Charge, um Barren zu bilden durch Bodengießen;
(5) Umschmelzen der Barren mittels Vakuum-Lichtbogen-Umschmelzen (VAR) oder Elektroschlackenumschmelzen (ESR);
(6) Warmbearbeiten der Barren, um Formblöcke zu bilden, die Querschnitte gleichförmiger Härtbarkeit von 508 mm (20 Inch) oder größer haben, wobei die Formblöcke die folgende Zusammensetzung in Gewichtsprozent haben:
| | |
|---|---|
| C | 0,15 - 0,40, |
| Mn | 0,60 - 1,10, |
| Si | 0,60 max, |
| Cr | 1,00 - 2,00, |
| Ni | 0,15 - 1,00, |
| Mo | 0,20 - 0,55, |
| V | 0,05 - 0,20, |
| Al | 0,040 max, |
| P | 0,025 max, |
| S | 0,025 max; |
zufällige Verunreinigungen, und Fe als Rest,
(7) Wärmebehandeln der Formblöcke durch Abschrecken und Tempern; und
(8) Bilden von Kunststoffspritzgusswerkzeug aus den abgeschreckten und getemperten Blöcken.

2. Verfahren zur Herstellung von Kunststoffspritzgusswerkzeug nach Anspruch 1, wobei die Heizeinheit ein Elektrolichtbogenofen ist.

3. Verfahren zur Herstellung von Kunststoffspritzgusswerkzeug nach Anspruch 1, wobei die Heizeinheit ein Vakuuminduktionsofen ist.

4. Verfahren zur Herstellung von Kunststoffspritzgusswerkzeug nach Anspruch 1, ferner **dadurch gekennzeichnet, dass** die Formblöcke die folgende Zusammensetzung in Gewichtsprozent haben:
| | |
|---|---|
| C | 0,20 - 0,35, |
| Mn | 0,70 - 1,10, |
| Si | 0,15 - 0,50, |
| Cr | 1,10 - 2,00, |
| Ni | 0,20 - 0,90, |
| Mo | 0,30 - 0,55, |
| V | 0,07 - 0,20, |
| Al | 0,040 max, |
| P | 0,020 max, |
| S | 0,015 max, |
zufällige Verunreinigungen, und Fe als Rest.

5. Verfahren zur Herstellung des Kunststoffspritzgussformblockwerkzeugs nach Anspruch 1, ferner **dadurch gekennzeichnet, dass** die Formblöcke die folgende Zusammensetzung in Gewichtsprozent haben:
| | |
|---|---|
| C | 0,25 - 0,33, |
| Mn | 0,80 - 1,10, |
| Si | 0,20 - 0,45, |
| Cr | 1,20 - 2,00, |
| Ni | 0,30 - 0,80, |
| Mo | 0,35 - 0,55, |
| V | 0,10 - 0,20, |
| Al | 0,020 max, |
| P | 0,015 max, |
| S | 0,005 max, |
zufällige Verunreinigungen, und Fe als Rest.

6. Kunststoffspritzgusswerkzeug mit gleichförmiger hoher Härtbarkeit in Querschnitten von 508 mm (20 Inch) und größer, wobei das Kunststoffspritzgusswerkzeug durch ein Verfahren hergestellt ist, das aufweist:
(1) Bilden einer Stahlschmelze, die weniger als alle der Pulverlegierungsbestandteile hat;
(2) Transferieren der Schmelze zu einem Behälter, um dadurch eine Charge zu bilden;
(3) Erhitzen, weiteres Legieren der Legierungszusammensetzung in eine Spezifikation und Feinen der Charge durch Rühren unter Verwendung von Spülen mit Argon, magnetischem Rühren oder eines anderen Mischverfahrens;
(4) Vakuum entgasen, Ausgießen und Gießen der Charge, um Barren zu bilden durch Bodengießen;
(5) Umschmelzen der Barren mittels Vakuum-Lichtbogen-Umschmelzen (VAR) oder Elektroschlackenumschmelzen (ESR);
(6) Warmbearbeiten der Barren, um Formblöcke zu bilden, die Querschnitte gleichförmiger Härtbarkeit von 508 mm (20 Inch) oder größer haben, wobei die Formblöcke die folgende Zusammensetzung in Gewichtsprozent haben:
| | |
|---|---|
| C | 0,15 - 0,40, |
| Mn | 0,60 - 1,10, |
| Si | 0,60 max, |
| Cr | 1,00 - 2,00, |
| Ni | 0,15 - 1,00, |
| Mo | 0,20 - 0,55, |
| V | 0,05 - 0,20, |
| Al | 0,040 max, |
| P | 0,025 max, |
| S | 0,025 max; |
zufällige Verunreinigungen, und Fe als Rest,
(7) Wärmebehandeln der Formblöcke durch Abschrecken und Tempern; und
(8) Bilden des Kunststoffspritzgusswerkzeugs aus den abgeschreckten und getemperten Blöcken.

7. Kunststoffspritzgusswerkzeug nach Anspruch 6, wobei Bilden einer Stahlschmelze aufweist: Bilden einer Stahlschmelze durch Elektrolichtbogenschmelzen.

8. Kunststoffspritzgusswerkzeug nach Anspruch 6, wobei Bilden einer Stahlschmelze aufweist: Bilden einer Stahlschmelze durch Vakuuminduktionsschmelzen.

9. Kunststoffspritzgusswerkzeug nach Anspruch 6, wobei die Formblöcke die folgende Zusammensetzung in Gewichtsprozent haben:
| | |
|---|---|
| C | 0,20 - 0,35, |
| Mn | 0,70 - 1,10, |
| Si | 0,15 - 0,50, |
| Cr | 1,10 - 2,00, |
| Ni | 0,20 - 0,90, |
| Mo | 0,30 - 0,55, |
| V | 0,07 - 0,20, |
| Al | 0,040 max, |
| P | 0,020 max, |
| S | 0,015 max, |
zufällige Verunreinigungen, und Fe als Rest.

10. Kunststoffspritzgusswerkzeug nach Anspruch 6, wobei die Formblöcke die folgende Zusammensetzung in Gewichtsprozent haben:
| | |
|---|---|
| C | 0,25 - 0,33, |
| Mn | 0,80 - 1,10, |
| Si | 0,20 - 0,45, |
| Cr | 1,20 - 2,00, |
| Ni | 0,30 - 0,80, |
| Mo | 0,35 - 0,55, |
| V | 0,10 - 0,20, |
| Al | 0,020 max, |
| P | 0,015 max, |
| S | 0,005 max, |
zufällige Verunreinigungen, und Fe als Rest.

## Revendications

1. Procédé de fabrication d'outil de moulage par injection de matière plastique présentant une excellente trempabilité dans des sections supérieures ou égales à 508 mm (20 pouces), ledit procédé comprenant les étapes consistant à :
(1) former une matière fondue d'acier ayant moins que tous les ingrédients d'alliage en poudre dans une unité de chauffage ;
(2) transférer ladite matière fondue dans un récipient pour former de ce fait une matière chaude ;
(3) chauffer l'alliage supplémentaire de la composition d'alliage à une spécification et raffiner ladite matière chaude par agitation en utilisant une purge à l'argon, une agitation magnétique ou une autre méthode de mélange ;
(4) dégazer sous vide, verser et couler ladite matière chaude pour former des lingots par coulée en source ;
(5) refondre lesdits lingots par refusion à l'arc sous vide (VAR) ou refusion sous laitier électroconducteur (ESR) ;
(6) façonner à chaud lesdits lingots pour former des blocs de moule et de filière présentant des sections transversales de trempabilité uniforme supérieure ou égale à 508 mm (20 pouces), lesdits blocs de moule et de filière présentant la composition suivante en pourcentage de poids :
| | |
|---|---|
| C | 0,15 à 0,40, |
| Mn | 0,60 à 1,10, |
| Si | 0,60 maxi, |
| Cr | 1,00 à 2,00, |
| Ni | 0,15 à 1,00, |
| Mo | 0,20 à 0,55, |
| V | 0,05 à 0,20, |
| Al | 0,040 maxi, |
| P | 0,025 maxi, |
| S | 0,025 maxi, |
impuretés inévitables, et
un solde de Fe ;
(7) traiter thermiquement lesdits blocs de moule et de filière par trempe et revenu ; et
(8) former un outil de moulage par injection de matière plastique à partir desdits blocs trempés et revenus.

2. Procédé de fabrication d'outil de moulage par injection de matière plastique selon la revendication 1, dans lequel ladite unité de chauffage est un four à arc électrique.

3. Procédé de fabrication d'outil de moulage par injection de matière plastique selon la revendication 1, dans lequel ladite unité de chauffage est un four à induction sous vide.

4. Procédé de fabrication d'outil de moulage par injection de matière plastique selon la revendication 1, **caractérisé en outre en ce que** lesdits blocs de moule et de filière présentent la composition suivante en pourcentage de poids :
| | |
|---|---|
| C | 0,20 à 0,35, |
| Mn | 0,70 à 1,10, |
| Si | 0,15 à 0,50, |
| Cr | 1,10 à 2,00, |
| Ni | 0,20 à 0,90, |
| Mo | 0,30 à 0,55, |
| V | 0,07 à 0,20, |
| Al | 0,040 maxi, |
| P | 0,020 maxi, |
| S | 0,015 maxi, |
impuretés inévitables, et
un solde de Fe.

5. Procédé de fabrication d'outil de blocs de moule et de filière par injection de matière plastique selon la revendication 1, **caractérisé en outre en ce que** lesdits blocs de moule et de filière présentent la composition suivante en pourcentage de poids :
| | |
|---|---|
| C | 0,25 à 0,33, |
| Mn | 0,80 à 1,10, |
| Si | 0,20 à 0,45, |
| Cr | 1,20 à 2,00, |
| Ni | 0,30 à 0,80, |
| Mo | 0,35 à 0,55, |
| V | 0,10 à 0,20, |
| Al | 0,020 maxi, |
| P | 0,015 maxi, |
| S | 0,005 maxi, |
impuretés inévitables, et
un solde de Fe.

6. Outil de moulage par injection de matière plastique présentant une excellente trempabilité dans des sections supérieures ou égales à 508 mm (20 pouces), ledit outil de moulage par injection de matière plastique étant fabriqué par un procédé comprenant :
(1) la formation d'une matière fondue d'acier ayant moins que tous les ingrédients d'alliage en poudre ;
(2) le transfert de ladite matière fondue dans un récipient pour former de ce fait une matière chaude ;
(3) le chauffage, l'alliage supplémentaire de la composition d'alliage à une spécification et le raffinage de ladite matière chaude par agitation en utilisant une purge à l'argon, une agitation magnétique ou une autre méthode de mélange ;
(4) le dégazage sous vide, le versage et la coulée de ladite matière chaude pour former des lingots par coulée en source ;
(5) la refusion desdits lingots par refusion à l'arc sous vide (VAR) ou refusion sous laitier électroconducteur (ESR) ;
(6) le façonnage à chaud desdits lingots pour former des blocs de moule et de filière présentant des sections transversales de trempabilité uniforme supérieure ou égale à 508 mm (20 pouces), lesdits blocs de moule et de filière présentant la composition suivante en pourcentage de poids :
| | |
|---|---|
| C | 0,15 à 0,40, |
| Mn | 0,60 à 1,10, |
| Si | 0,60 maxi, |
| Cr | 1,00 à 2,00, |
| Ni | 0,15 à 1,00, |
| Mo | 0,20 à 0,55, |
| V | 0,05 à 0,20, |
| Al | 0,040 maxi, |
| P | 0,025 maxi, |
| S | 0,025 maxi, |
impuretés inévitables, et
un solde de Fe ;
(7) le traitement thermique desdits blocs de moule et de filière par trempe et revenu ; et
(8) la formation dudit outil de moulage par injection de matière plastique à partir desdits blocs trempés et revenus.

7. Outil de moulage par injection de matière plastique selon la revendication 6, dans lequel la formation de ladite matière fondue d'acier comprend la formation de ladite matière fondue d'acier par fusion à arc électrique.

8. Outil de moulage par injection de matière plastique selon la revendication 6, dans lequel la formation de ladite matière fondue d'acier comprend la formation de ladite matière fondue d'acier par fusion à induction sous vide.

9. Outil de moulage par injection de matière plastique selon la revendication 6, dans lequel lesdits blocs de moule et de filière présentent la composition suivante en pourcentage de poids :
| | |
|---|---|
| C | 0,20 à 0,35, |
| Mn | 0,70 à 1,10, |
| Si | 0,15 à 0,50, |
| Cr | 1,10 à 2,00, |
| Ni | 0,20 à 0,90, |
| Mo | 0,30 à 0,55, |
| V | 0,07 à 0,20, |
| Al | 0,040 maxi, |
| P | 0,020 maxi, |
| S | 0,015 maxi, |
impuretés inévitables, et
un solde de Fe.

10. Outil de moulage par injection de matière plastique selon la revendication 6, dans lequel lesdits blocs de moule et de filière présentent la composition suivante en pourcentage de poids :
| | |
|---|---|
| C | 0,25 à 0,33, |
| Mn | 0,80 à 1,10, |
| Si | 0,20 à 0,45, |
| Cr | 1,20 à 2,00, |
| Ni | 0,30 à 0,80, |
| Mo | 0,35 à 0,55, |
| V | 0,10 à 0,20, |
| Al | 0,020 maxi, |
| P | 0,015 maxi, |
| S | 0,005 maxi, |
impuretés inévitables, et
un solde de Fe.
